(19) Europäisches Patentamt
European Patent Office
Office européen des brevets

(11) **EP 4 513 789 A1**

(12) **EUROPEAN PATENT APPLICATION**

(43) Date of publication:
26.02.2025 Bulletin 2025/09

(21) Application number: 24195902.2

(22) Date of filing: 22.08.2024

(51) International Patent Classification (IPC):
**H04B 17/14** $^{(2015.01)}$    **H04B 1/525** $^{(2015.01)}$
H04B 1/38 $^{(2015.01)}$    H04B 1/40 $^{(2015.01)}$
H04B 1/62 $^{(2006.01)}$    H04L 25/02 $^{(2006.01)}$
H04L 27/148 $^{(2006.01)}$

(52) Cooperative Patent Classification (CPC):
**H04B 17/14; H04B 1/525;** H04B 1/40; H04B 1/62;
H04B 17/18; H04B 17/19; H04B 17/22;
H04L 25/0212; H04L 27/148

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.08.2023  US 202363578670 P
18.08.2024  US 202418808063

(71) Applicant: MediaTek Inc.
Hsin-Chu 300 (TW)

(72) Inventors:
• WU, Ming-Chou
  30078 Hsinchu City (TW)
• LEONG, Edmund, Wen Jen
  30078 Hsinchu City (TW)
• LU, Chiyuan
  San José, CA, 95134 (US)
• TSENG, Ting-Che
  30078 Hsinchu City (TW)
• DENG, Zhiming
  San José, CA, 95134 (US)

(74) Representative: Pfenning, Meinig & Partner mbB
Patent- und Rechtsanwälte
Joachimsthaler Straße 10-12
10719 Berlin (DE)

(54) **METHOD AND APPARATUS FOR CALIBRATING TRANSCEIVER**

(57)    A calibration apparatus for calibrating a transceiver includes a loop back circuit, an estimation circuit, and a calibration circuit. The loop back circuit is coupled between a mixer output port of a transmitter (Tx) of the transceiver and a mixer input port of a receiver (Rx) of the transceiver, and applies a sequence of different loop gains. The estimation circuit receives a loop back receiving signal that is output from the Rx under the sequence of different loop gains, and generates at least one estimated value of impairment of the transceiver by performing channel estimation according to at least the loop back receiving signal. The calibration circuit performs calibration upon the transceiver according to the at least one estimated value.

**Description**

CROSS REFERENCE TO RELATED APPLICATIONS

This application claims the benefit of U.S. Provisional Application No. 63/578,670, filed on August 25th, 2023. The content of the application is incorporated herein by reference.

BACKGROUND

The present invention relates to wireless communications, and more particularly, to a method and apparatus for calibrating a transceiver.

The in-phase/quadrature (IQ) mismatch is a common analog impairment in direct-conversion transmitter (Tx) and receiver (Rx) paths. In addition, Tx-to-Rx coupling interferes with the detection of the impairment. It is unreasonably expensive in die area and current consumption to guarantee and suppress the impairment by a circuit design, since mismatch is proportional to the device size. Furthermore, these transmitter and receiver (TRx) IQ mismatches and interference are generated by TRx baseband (BB) and radio-frequency (RF) circuits. They are time-variation due to temperature variation, voltage variation and/or power level variation, and are merged in the same in-band at the receiver terminal. As a result, they can't be measured and separated from the Rx terminal signal with a general detection function.

The carrier leakage in Tx and self-mixing induced direct current (DC) offset in Rx are analog impairments both caused by random mismatch in the process. It is unreasonably expensive in die area and current consumption to guarantee and suppress the impairments by a circuit design, since mismatch is proportional to the device size. Furthermore, these TRx DC leakages and interference are generated by TRx BB and RF circuits. They are time-variation due to temperature variation, voltage variation and/or power level variation, and are merged in the same in-band at the receiver terminal. They can't be measured and separated from the Rx terminal signal with a general detection function.

Thus, there is a need for an innovative calibration design that is capable of calibrating Tx IQ mismatch, Rx IQ mismatch, Tx DC leakage, and Rx DC leakage in a transceiver.

SUMMARY

One of the objectives of the claimed invention is to provide a method and apparatus for calibrating a transceiver.

According to a first aspect of the present invention, an exemplary calibration apparatus for calibrating a transceiver is disclosed. The exemplary calibration apparatus includes a loop back circuit, an estimation circuit, and a calibration circuit. The loop back circuit is coupled between a mixer output port of a transmitter (Tx) of the transceiver and a mixer input port of a receiver (Rx) of the transceiver, and is configured to apply a sequence of different loop gains. The estimation circuit is configured to receive a loop back receiving signal that is output from the Rx under the sequence of different loop gains, and generate at least one estimated value of impairment of the transceiver by performing channel estimation according to at least the loop back receiving signal. The calibration circuit is arranged to perform calibration upon the transceiver according to the at least one estimated value.

According to a second aspect of the present invention, an exemplary calibration method for calibrating a transceiver is disclosed. The exemplary calibration method includes: controlling a loop back circuit to apply a sequence of different loop gains, wherein the loop back circuit is coupled between a mixer output port of a transmitter (Tx) of the transceiver and a mixer input port of a receiver (Rx) of the transceiver; receiving a loop back receiving signal from the Rx under the sequence of different loop gains; generating at least one estimated value of impairment of the transceiver by performing channel estimation according to at least the loop back receiving signal; and performing calibration upon the transceiver according to the at least one estimated value.

These and other objectives of the present invention will no doubt become obvious to those of ordinary skill in the art after reading the following detailed description of the preferred embodiment that is illustrated in the various figures and drawings.

BRIEF DESCRIPTION OF THE DRAWINGS

FIG. 1 is block diagram of a calibration apparatus used for calibrating a transceiver according to an embodiment of the present invention.

FIG. 2 is a diagram illustrating one transceiver architecture with TRx-IQ mismatch and TRx-DC calibration according to an embodiment of the present invention.

FIG. 3 is a diagram illustrating a TRx EQ-BB model according to an embodiment of the present invention.

FIG. 4 is a flowchart of a calibration method according to an embodiment of the present invention.

DETAILED DESCRIPTION

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

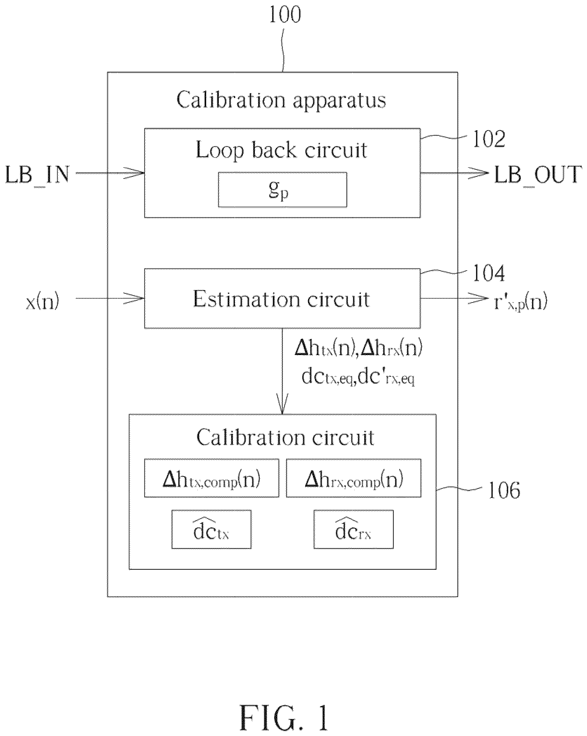

FIG. 1 is block diagram of a calibration apparatus used for calibrating a transceiver according to an embodiment of the present invention. The calibration apparatus 100 includes a loop back circuit 102, an estimation circuit 104, and a calibration circuit 106. It should be noted that only the components pertinent to the present invention are illustrated. In practice, the calibration apparatus 100 is allowed to have other components for achieving other designated functions. The loop back circuit 102 is coupled between a mixer output port LB_IN of a transmitter of the transceiver and a mixer input port LB_OUT of a receiver of the transceiver, and is configured to apply a sequence of different loop gains $g_p$ to a loop back signal passing through a loop back path. For example, the loop back circuit 102 may provide an on-chip loop back path between the transmitter and the receiver, where an input terminal of the on-chip loop back path may be located at any position after the mixer output of the transmitter, and an output terminal of the on-chip loop back path may be located at any position before the mixer input of the receiver.

The loop back circuit 102 is configured to apply different loop gains $g_p$ during a calibration procedure. The loop back circuit 102 may be implemented using any circuit type/structure capable of achieving the objective of providing different loop gains $g_p$ during the calibration procedure. For example, the loop back circuit 102 may include a multi-phase phase shifter such as a two-phase rotator, a three-phase rotator, or a four-phase rotator. Hence, the multi-phase phase shifter may be controlled to apply a sequence of different loop gains $g_p$ by performing a multi-phase phase rotation. One implementation of the two-phase rotator may include a bypass circuit ($e^{j0}$ = +1) and an inverter ($e^{j\pi}$ = -1). Another implementation of the two-phase rotator may support two phases $\theta_1 + \theta_c$ and $\theta_2 + \theta_c$, where $\theta_1 \neq \theta_2$, and $\theta_c$ is an any constant value. One implementation of the three-phase rotator may support three phases $\theta_1 + \theta_c$, $\theta_2 + \theta_c$ and $\theta_3 + \theta_c$, where $\theta_1 \neq \theta_2 \neq \theta_3$, and $\theta_c$ is an any constant value. One implementation of the four-phase rotator may support four phases $\theta_1 + \theta_c$, $\theta_2 + \theta_c$, $\theta_3 + \theta_c$ and $\theta_4 + \theta_c$, where $\theta_1 \neq \theta_2 \neq \theta_3 \neq \theta_4$, and $\theta_c$ is an any constant value. These are for illustrative purposes only, and are not meant to be limitations of the present invention.

In some embodiments of the present invention, the multi-phase phase shifter may be a standalone circuit. In some embodiments of the present invention, the multi-phase phase shifter may be integrated within an amplifier. In some embodiments of the present invention, the multi-phase phase shifter may be integrated within the Tx mixer. In some embodiments of the present invention, the multi-phase phase shifter may be integrated within the Rx mixer. To put it simply, as long as a multi-phase phase shifter (or a function block of applying different loop gains $g_p$) is located on the loop back path, the present invention has no limitations on actual hardware implementation of the multi-phase phase shifter (or the function block of applying different loop gains $g_p$).

The estimation circuit 104 is configured to receive a loop back receiving signal $r'_{x,p}(n)$ that is output from the receiver of the transceiver under the sequence of different loop gains $g_p$ during the calibration procedure, and generate at least one estimated value of impairment of the transceiver by performing channel estimation according to at least the loop back receiving signal $r'_{x,p}(n)$. For example, the impairment of the transceiver to be calibrated may include Tx IQ mismatch, Rx IQ mismatch, Tx DC leakage, and/or Rx DC leakage. Hence, in some embodiments of the present invention, the estimation circuit 104 may receive one or both of a baseband input $x(n)$ of the transmitter and the loop back receiving signal (i.e., baseband output) $r'_{x,p}(n)$ of the receiver, and refer to one or both of the baseband input $x(n)$ and the loop back receiving signal $r'_{x,p}(n)$ to obtain one or more of the estimated values, including an equivalent baseband Tx total image channel response $\Delta h_{tx}(n)$, an equivalent baseband Rx total image channel response $\Delta h_{rx}(n)$, an equivalent baseband Tx total DC offset $dc_{tx,eq}$, and an equivalent baseband Rx total DC offset $dc'_{rx,eq}$. The estimation circuit 104 may be configured to perform channel estimation in a software-based manner or a hardware-based manner. For example, the estimation circuit 104 may be implemented by all-digital hardware, a digital signal processor (DSP), or a general-purpose processor.

The calibration circuit 106 is arranged to perform calibration upon the transceiver according to the at least one estimated value (e.g., $\Delta h_{tx}(n)$, $\Delta h_{rx}(n)$, $dc_{tx,eq}$, and/or $dc'_{rx,eq}$) obtained by the estimation circuit 104. For example, the calibration circuit 106 may include a Tx IQ mismatch compensator circuit, an Rx IQ mismatch compensator circuit, a Tx direct current (DC) remover circuit, and an Rx DC remover circuit, where the Tx IQ mismatch compensator circuit is a filter configured to perform Tx IQ mismatch compensation (pre-distortion) according to a Tx image compensated coefficient set $\Delta h_{tx,comp}(n)$ (which may depend on $\Delta h_{tx}(n)$), the Rx IQ mismatch compensator circuit is a filter configured to perform Rx IQ mismatch compensation (pre-distortion) according to an Rx image compensated coefficient set $\Delta h_{rx,comp}(n)$ (which may depend on $\Delta h_{rx}(n)$), and the Tx DC remover circuit is configured to perform Tx DC removal according to a Tx DC leakage compensated value $\widehat{dc}_{tx}$ (which may depend on $dc_{tx,eq}$), and the Rx DC remover circuit is configured to perform Rx DC removal according to a Rx DC leakage compensated value $\widehat{dc}_{rx}$ (which may depend on $dc'_{rx,eq}$).

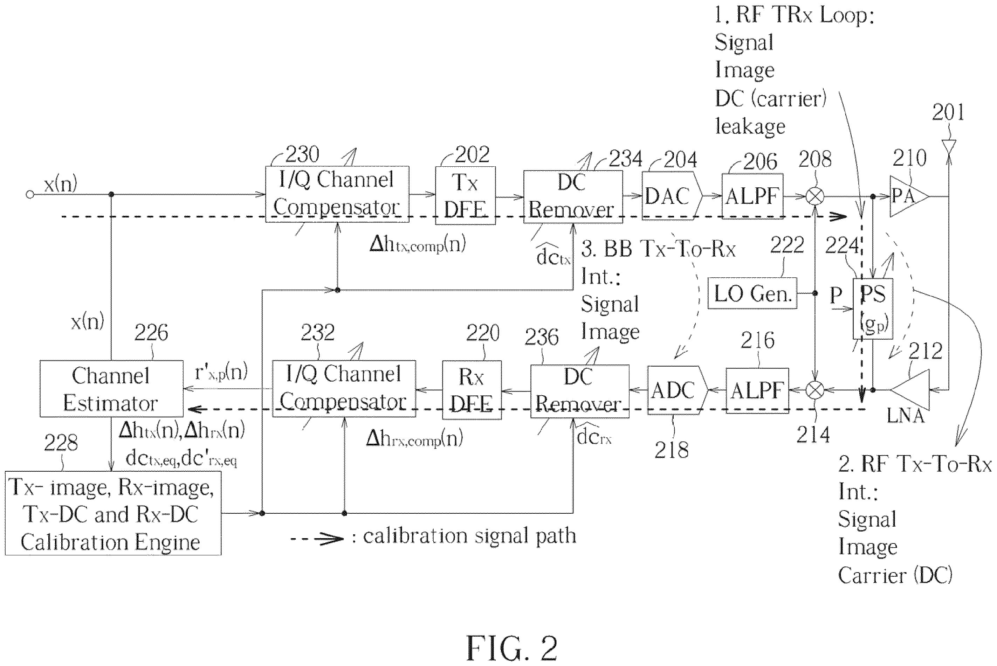

It should be noted that the proposed calibration apparatus 100 is applicable to any transceiver architecture. That is, the present invention has no limitations on the transceiver architecture. Any transceiver using the proposed calibration apparatus for calibrating Tx IQ mismatch, Rx IQ mismatch, Tx DC leakage, and/or Rx DC leakage falls within the scope of the present invention. FIG. 2 is a diagram illustrating one transceiver architecture with TRx-IQ mismatch and TRx-DC calibration according to an embodiment of the present invention. The transmitter of the transceiver includes a Tx digital front-end (DFE) 202, a digital-to-analog converter (DAC) 204, an analog low-pass filter (ALPF) 206, a Tx mixer 208, and a power amplifier (PA) 210. The receiver of the transceiver includes a low-noise amplifier (LNA) 212, an Rx mixer 214, an ALPF 216, an analog-to-digital converter (ADC) 218, and an Rx DFE 220. The Tx mixer 208 is used for up-conversion, and receives a local oscillator (LO) signal from an LO generator (labeled by "LO Gen.") 222. The Rx mixer 214 is used for down-conversion, and receives an LO signal from the LO generator 222. When the transceiver operates under a normal Tx mode, an RF output of the PA 210 is transmitted over the air through an antenna 201. When the transceiver operates under a normal Rx mode, the LNA 212 receives an RF input from the antenna 201.

In this embodiment, the loop back circuit 102 shown in FIG. 1 is implemented by a phase shifter (PS) 224, the estimation circuit 104 shown in FIG. 1 is implemented by a channel estimator 226, and the calibration circuit 106 shown in FIG. 1 is implemented by a Tx-image, Rx-image, Tx-DC and Rx-DC calibration engine 228, I/Q channel compensators 230, 232, and DC removers 234, 236.

As shown in FIG. 2, a signal part, an image part and a DC (carrier) leakage part are delivered via the RF TRx loop, and the Tx-to-Rx coupling interferences include the BB Tx-to-Rx interference (labeled by "BB Tx-to-Rx Int.") with a signal part and an image part and the RF Tx-to-Rx interference (labeled by "RF Tx-to-Rx Int.") with a signal part, an image part, and a carrier leakage part. The present invention proposes a TRx equivalent baseband (EQ-BB) model. Based on the TRx EQ-BB model, the present invention proposes a method to calibrate both TX and RX IQ mismatches with TX-to-RX-coupling-induced image rejection rate (IRR) errors cancelled, and also proposes a method to calibrate both TX carrier leakage and RX DC offset with TX-to-RX-coupling-induced DC errors cancelled. Hence, the channel estimator 226 can employ the proposed methods for individually extracting estimated values of impairment of the transceiver.

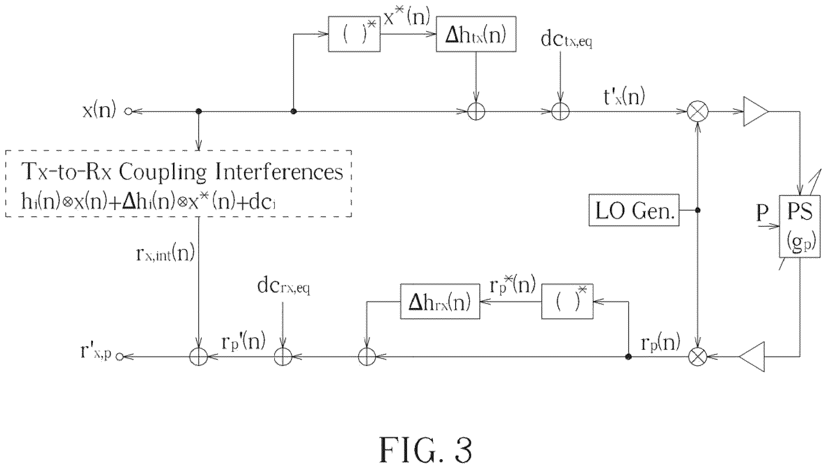

FIG. 3 is a diagram illustrating a TRx EQ-BB model according to an embodiment of the present invention. The transceiver loop function of the transceiver shown in FIG. 2 can be modeled by the TRx EQ-BB model shown in FIG. 3. The TRx EQ-BB model can be decomposed into several parts. The Tx IQ mismatch EQ-BB model can be expressed using the following equation.

$$t'_x(n) \approx x(n) + \Delta h_{tx}(n) \otimes x^*(n) + dc_{tx,eq} \qquad (1)$$

In above equation (1), $\otimes$ is a convolution operator, $t'_x(n)$ represents an equivalent baseband Tx total signal, $x(n)$ represents a calibration source signal which is a baseband input of the transmitter, $x^*(n)$ is a conjugate of $x(n)$ and represents an image of the baseband input x(n), $\Delta h_{tx}(n)$ represents an equivalent baseband Tx total image channel response, and $dc_{tx,eq}$ represents an equivalent baseband Tx total DC offset (which also covers the carrier leakage).

The calibration signal source (i.e., baseband input x(n)) may be any signal type. For example, the baseband input $x(n)$ is a modulation signal to be actually transmitted over the air under a normal Tx mode, the loop back receiving signal $r'_{x,p}(n)$ is generated in response to the modulation signal that carries valid user data, and the calibration of the transceiver is on-the-fly (OTF) calibration (also called background calibration). For another example, the baseband input $x(n)$ is a non-modulation signal (e.g., a pseudo random code (PNC) signal, a single-tone signal, or a multi-tone signal) that is specific to the calibration task and carries no valid user data, the loop back receiving signal $r'_{x,p}(n)$ is generated in response to the non-modulation signal, and the calibration of the transceiver is static (non-OTF) calibration (also called foreground calibration).

The phase shifter (PS) provides a loop back path between the transmitter and the receiver. The PS EQ-BB model can be expressed using the following equation.

$$r_{x,p}(n) = t'_x(n)g_p \qquad (2)$$

In above equation (2), $g_p$ represents an equivalent baseband gain (complex) of the phase shifter (which is a multi-phase phase shifter controlled by a phase index p), and $r_{x,p}(n)$ represents an equivalent baseband output signal of the phase shifter.

The RF input of the receiver is obtained from an output of the phase shifter. The Rx IQ mismatch EQ-BB model can be expressed using the following equation.

$$r'_p(n) \approx r_p(n) + \Delta h_{rx}(n) * r^*_p(n) + dc_{rx,eq} \qquad (3)$$

In above equation (3), $r_p(n)$ represents an equivalent baseband input of the receiver, and is the same as the equivalent baseband output signal of the phase shifter $r_{x,p}(n)$ (i.e., $r_p(n) = r_{x,p}(n)$), $r'_p(n)$ represents an equivalent baseband Rx signal, $\Delta h_{rx}(n)$ represents an equivalent baseband Rx total image channel response, and $dc_{rx,eq}$ represents an equivalent baseband Rx total DC offset (which includes the Rx RF carrier leakage part).

As mentioned above, the Tx-to-Rx coupling interferences include the BB Tx-to-Rx interference and the RF Tx-to-Rx interference. The Tx-to-Rx coupling interferences can be modeled to include a signal part, an image part, and a DC offset. The TRx interference EQ-BB model can be expressed using the following equation.

$$r_{x,int}(n) = h_i(n)\otimes x(n) + \Delta h_i(n)\otimes x^*(n) + dc_i \qquad (4)$$

In above equation (4), $r_{x,int}(n)$ represents a total interference signal that includes all Tx-to-Rx coupling interferences (signal part, image part, and DC (carrier leakage)), $h_i(n)$ represents an equivalent baseband channel response of the Tx-to-Rx coupling total interference signal (i.e., signal part of all Tx-to-Rx coupling interferences), $\Delta h_i(n)$ represents an equivalent baseband channel response of the Tx-to-Rx coupling total interference image (i.e., image part of all Tx-to-Rx coupling interferences), $dc_i$ represents an equivalent baseband value of the Tx-to-Rx coupling interference DC (i.e., DC (leakage) part of all Tx-to-Rx coupling interferences) that comes from Tx DC offset (leakage).

Hence, the TRx loop EQ-BB model can be expressed using the following equation.

$$r'_{x,p}(n) \approx \underbrace{\left[g_p\delta(n) + h_i(n)\right]}_{Signal\ Terms\ (h_{s,p}(n))} \otimes x(n) + \underbrace{\left[\Delta h_{tx}(n)g_p + \Delta h_{rx}(n)g^*_p + \Delta h_i(n)\right]}_{Image\ Terms\ \left(\Delta h_p(n)\right)} \otimes x^*(n) +$$

$$\underbrace{\left[dc_{tx,eq}g_p + dc_{rx,eq} + dc_i\right]}_{DC\ Terms\ (dc_p)} \qquad (5)$$

In above equation (5), $r'_{x,p}(n)$ represents a total receiver signal (i.e., loop back receiving signal), including TRx signal, TRx image, TRx DC offset and Tx-to-Rx coupling interferences, $h_{s,p}(n)$ represents Tx-to-Rx loop channel response of signal ($x(n)$), $\Delta h_p(n)$ represents a Tx-to-Rx loop channel response of image ($x^*(n)$), and $dc_p$ represents a Tx-to-Rx loop total DC offset value.

Regarding each loop gain $g_p$ of the phase shifter controlled by a selected phase index p, the channel estimator 226 can obtain the corresponding Tx-to-Rx loop channel response of signal $h_{s,p}(n)$, Tx-to-Rx loop channel response of image $\Delta h_p(n)$, and Tx-to-Rx loop total DC offset value $dc_p$ through arithmetic manipulation of the total receiver signal (i.e., loop back receiving signal) $r'_{x,p}(n)$.

For example, the channel estimator 226 may estimate a plurality of Tx-to-Rx loop channel responses of signal $h_{s,p}(n)$ by performing delay correlation to project the loop back receiving signal $r'_{x,p}(n)$ onto the baseband input $x(n)$ of the transmitter, where the loop back receiving signal $r'_{x,p}(n)$ is generated under a sequence of different loop gains $g_p$ (which may be applied by the phase shifter with different phase indexes) during the calibration procedure, and the plurality of Tx-to-Rx loop channel responses of signal $h_{s,p}(n)$ correspond to different loop gains $g_p$, respectively.

For another example, the channel estimator 226 may estimate a plurality of Tx-to-Rx loop channel responses of image $\Delta h_p(n)$ by performing delay correlation to project the loop back receiving signal $r'_{x,p}(n)$ onto an image $x^*(n)$ of the baseband input $x(n)$ of the transmitter, where the loop back receiving signal $r'_{x,p}(n)$ is generated under a sequence of different loop gains $g_p$ (which may be applied by the phase shifter with different phase indexes) during the calibration procedure, and the plurality of Tx-to-Rx loop channel responses of image $\Delta h_p(n)$ correspond to different loop gains $g_p$, respectively.

For another example, the channel estimator 226 may estimate a plurality of Tx-to-Rx loop total DC values $dc_p$ by averaging the loop back receiving signal $r'_{x,p}(n)$, where the loop back receiving signal $r'_{x,p}(n)$ is generated under a sequence of different loop gains $g_p$ (which may be applied by the phase shifter with different phase indexes) during the calibration procedure, and the plurality of Tx-to-Rx loop total DC values $dc_p$ correspond to different loop gains $g_p$, respectively.

After Tx-to-Rx loop channel responses of signal $h_{s,p}(n)$ are obtained, the channel estimator 226 can extract the loop gain $g_p$ and the equivalent baseband channel response $h_i(n)$ of the Tx-to-Rx coupling total interference signal $r_{x,int}(n)$ individually. In this embodiment, the phase shifter (PS) is designed as a multi-phase phase shifter, and the sum of its gains meets zero sum ($\Sigma g_p = 0$) of the PS filter. Hence, the $h_i(n)$ and $g_p$ can be extracted from the equation $h_{s,p}(n) = g_p\delta(n) + h_i(n)$ with two phases ($g_p$, $P \geq 2$) at least, where $P$ is the phase number of the phase shifter, and the two phases should be different ($\angle g_1 \neq \angle g_2$) for this case. Since the equivalent baseband channel response $h_i(n)$ can be estimated separately, the loop gain $g_p$ is estimated under a condition that the Tx-to-Rx coupling interferences are rejected/suppressed. It should be noted that the number of Tx-to-Rx loop channel responses of signal $h_{s,p}(n)$ used for extract the loop gain $g_p$ and the equivalent baseband channel response $h_i(n)$ of the Tx-to-Rx coupling total interference signal $r_{x,int}(n)$ may be adjusted, depending upon actual design considerations.

After Tx-to-Rx loop channel responses of image $\Delta h_p(n)$ are obtained, the channel estimator 226 can extract the equivalent baseband Tx total image channel response $\Delta h_{tx}(n)$, the equivalent baseband Rx total image channel response $\Delta h_{rx}(n)$, and the equivalent baseband channel response of the Tx-to-Rx coupling total interference image $\Delta h_i(n)$ individually. For some applications, all of $\Delta h_{tx}(n)$, $\Delta h_{rx}(n)$, and $\Delta h_i(n)$ are concerned. However, for other applications, it is possible that not all of $\Delta h_{tx}(n)$, $\Delta h_{rx}(n)$, and $\Delta h_i(n)$ are concerned.

In a first case where $\Delta h_{tx}(n)$, $\Delta h_{rx}(n)$, and $\Delta h_i(n)$ are all considered. The $\Delta h_{tx}(n)$, $\Delta h_{rx}(n)$ and $\Delta h_i(n)$ can be extracted individually from $\Delta h_p(n)$ ($\Delta h_p(n) = \Delta h_{tx}(n)g_p + \Delta h_{rx}(n)g_p^* + \Delta h_i(n)$) with three phases ($g_p$, $P \geq 3$) at least. And these phases of the phase shifter should be different and meet following conditions, $\angle g_{p1} \neq \angle g_{p2} \neq \angle g_{p3}$, $\angle g_{p1} \neq \angle g_{p2} +$

$\pi$ or $\angle g_{p1} \neq \angle g_{p3} + \pi$ (radian), for this case. Since the Tx-to-Rx coupling total interference image $\Delta h_i(n)$ can be estimated separately, the equivalent baseband Tx total image channel response $\Delta h_{tx}(n)$ and the equivalent baseband Rx total image channel response $\Delta h_{rx}(n)$ are estimated under a condition that the Tx-to-Rx coupling interferences are rejected/suppressed.

In a second case where only $\Delta h_{tx}(n)$ and $\Delta h_{rx}(n)$ need to be considered. The $\Delta h_{tx}(n)$ and $\Delta h_{rx}(n)$ can be extracted individually from $\Delta h_p(n)$ ($\Delta h_p(n) = \Delta h_{tx}(n)g_p + \Delta h_{rx}(n)g_p^*$, where $\Delta h_i(n)$ is small and/or can be ignored) with two phases ($g_p$, $P \geq 2$) at least. And these phases of the phase shifter should be different and meet the following condition, $\angle g_1 \neq \angle g_2$ or $\angle g_1 \neq \angle g_2 + \pi$ (radian), for this case.

In a third case where only $\Delta h_{tx}(n)$ and $\Delta h_i(n)$ need to be considered. The $\Delta h_{tx}(n)$ and $\Delta h_i(n)$ can be extracted individually from $\Delta h_p(n)$ ($\Delta h_p(n) = \Delta h_{tx}(n)g_p + \Delta h_i(n)$), where $\Delta h_{rx}(n)$ is small and/or can be ignored) with two phases ($g_p$, $P \geq 2$) at least. And these phases of the phase shifter should be different ($\angle g_{p1} \neq \angle g_{p2}$). Since the Tx-to-Rx coupling total interference image $\Delta h_i(n)$ can be estimated separately, the equivalent baseband Tx total image channel response $\Delta h_{tx}(n)$ is estimated under a condition that the Tx-to-Rx coupling interferences are rejected/suppressed.

In a fourth case where only $\Delta h_{rx}(n)$ and $\Delta h_i(n)$ need to be considered. The $\Delta h_{rx}(n)$ and $\Delta h_i(n)$ can be extracted individually from $\Delta h_p(n)$ ($\Delta h_p(n) = \Delta h_{rx}(n)g_p^* + \Delta h_i(n)$, where $\Delta h_{tx}(n)$ is small and/or can be ignored) with two phases ($g_p$, $P \geq 2$) at least. And these phases of the phase shifter should be different ($\angle g_{p1} \neq \angle g_{p2}$) for this case. Since the Tx-to-Rx coupling total interference image $\Delta h_i(n)$ can be estimated separately, the equivalent baseband Rx total image channel response $\Delta h_{rx}(n)$ is estimated under a condition that the Tx-to-Rx coupling interferences are rejected/suppressed.

It should be noted that the number of Tx-to-Rx loop channel responses of image $\Delta h_p(n)$ used for extract at least two of $\Delta h_{tx}(n)$, $\Delta h_{rx}(n)$, and $\Delta h_i(n)$ may be adjusted, depending upon actual design considerations.

The term $dc_i$ in the equation $dc_p = dc_{tx,eq}g_p + dc_{rx,eq} + dc_i$ is coupled from Tx-DC in the Tx path into the Rx path in the RF domain. Hence, it will automatically disappear when the Tx-DC is removed by calibration. The Tx-to-Rx loop total DC offset value $dc_p$ can be expressed using the following equations:

$$dc_p = dc_{tx,eq}g_p + dc_{rx,eq} + dc_i \qquad (6)$$

$$= dc_{tx,eq}g_p + dc'_{rx,eq} \qquad (7)$$

After the Tx-to-Rx loop total DC offset values $dc_p$ are obtained, an equivalent baseband Tx total DC offset $dc_{tx,eq}$ and an equivalent baseband Rx total DC offset $dc'_{rx,eq}$ can be extracted individually from the equation $dc_p = dc_{tx,eq}g_p + dc'_{rx,eq}$ with two phases ($g_p$, $P{\geq}2$) at least. And these two phases of the phase shifter should be different ($g_{p1} \neq g_{p2}$) for this case. It should be noted that the number of Tx-to-Rx loop total DC offset values $dc_p$ used for extract $dc_{tx,eq}$ and $dc'_{rx,eq}$ may be adjusted, depending upon actual design considerations.

The channel estimator 226 may employ either equation (6) or equation(7) to extract DC offsets later used for TRx-DC calibration. In a case where the equation (6) is employed by the channel estimator 226, one or more of $dc_{tx,eq}$, $dc_{rx,eq}$, and $dc_i$ can be extracted individually. In another case where the equation (7) is employed by the channel estimator 226, one or more of $dc_{tx,eq}$ and $dc'_{rx,eq}$ can be extracted individually.

Different applications may have different calibration requirements. For better comprehension of technical features of the present invention, a list of application combination cases is provided as below.

| Application Combination Cases List ('O': means should consider the relative item; '-': means shouldn't consider the relative item) | | | | | | | | |
|---|---|---|---|---|---|---|---|---|
| Cases | Transmitter | | Receiver | | Tx-to-Rx Coupling Interferences | Phase Shifter (PS) | | Image Estimator | DC Estimator |
| | Image | DC | Image | DC | | Num. (P) | Phase Condition | | |
| C1 | O | O | O | O | O | P$\geq$3 | $\Theta1 \neq \Theta2 \neq \Theta3$ | O | O |
| C2 | O | - | O | - | O | P$\geq$3 | $\Theta1 \neq \Theta2 \neq \Theta3$ | O | - |
| C3 | O | | O | | - | P$\geq$2 | $\Theta1 \neq \Theta2$ and $\Theta1 \neq \Theta2 +\pi$ | O | - |
| C4 | O | - | - | - | O | P$\geq$2 | $\Theta1 \neq \Theta2$ | O | - |
| C5 | - | - | O | - | O | P$\geq$2 | $\Theta1 \neq \Theta2$ | O | - |
| C6 | - | O | - | O | O | P$\geq$2 | $\Theta1 \neq \Theta2$ | - | O |
| C7 | - | O | - | O | - | P$\geq$2 | $\Theta1 \neq \Theta2$ | - | O |
| C8 | - | O | - | - | O | P$\geq$2 | $\Theta1 \neq \Theta2$ | - | O |

Regarding the case C1, the calibration apparatus 100 utilizes multi-phase properties of the phase shifter to measure (separate/extract) Tx-image, Rx-image and Tx-to-Rx image coupling interference (or IQ mismatches) and further measure (separate/extract) Tx-DC, Rx-DC and Tx-to-Rx DC coupling interference, and utilizes the results to do Tx IQ mismatch calibration, Rx IQ mismatch calibration, Tx DC offset calibration, and Rx DC offset calibration.

Regarding the case C2, the calibration apparatus 100 utilizes multi-phase properties of the phase shifter to measure (separate/extract) Tx-image, Rx-image and Tx-to-Rx image coupling interference (or IQ mismatches), and utilizes the results to do Tx IQ mismatch calibration and Rx IQ mismatch calibration.

Regarding the case C3, the calibration apparatus 100 utilizes multi-phase properties of the phase shifter to measure (separate/extract) Tx-image and Rx-image (or IQ mismatches), and utilizes the results to do Tx IQ mismatch calibration and Rx IQ mismatch calibration.

Regarding the case C4, the calibration apparatus 100 utilizes multi-phase properties of the phase shifter to measure (separate/extract) Tx-image and Tx-to-Rx image coupling interference (or IQ mismatches), and utilizes the results to do Tx IQ mismatch calibration.

Regarding the case C5, the calibration apparatus 100 utilizes multi-phase properties of the phase shifter to measure (separate/extract) Rx-image and Tx-to-Rx image coupling interference (or IQ mismatches), and utilizes the results to do Rx IQ mismatch calibration.

Regarding the case C6, the calibration apparatus 100 utilizes multi-phase properties of the phase shifter to measure (separate/extract) Tx-DC, Rx-DC and Tx-to-Rx DC coupling interference, and utilizes the results to do Tx DC offset calibration and Rx DC offset calibration.

Regarding the case C7, the calibration apparatus 100 utilizes multi-phase properties of the phase shifter to measure (separate/extract) Tx-DC and Rx-DC, and utilizes the results to do Tx DC offset calibration and Rx DC offset calibration.

Regarding the case C8, the calibration apparatus 100 utilizes multi-phase properties of the phase shifter to measure (separate/extract) Tx-DC and Tx-to-Rx DC coupling interference, and utilizes the results to do Tx DC offset calibration.

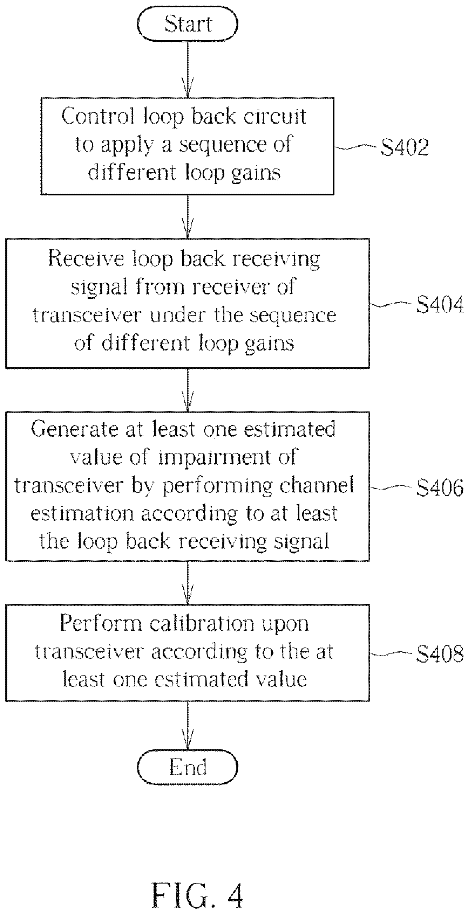

FIG. 4 is a flowchart of a calibration method according to an embodiment of the present invention. The calibration method may be employed by the calibration apparatus 100 shown in FIG. 1. Provided that the result is substantially the same, the steps are not required to be executed in the exact order shown in FIG. 4. At step S402, a loop back circuit is controlled to apply a sequence of different loop gains, wherein the loop back circuit is coupled between a mixer output port of a transmitter of a transceiver and a mixer input port of a receiver of the transceiver. At step S404, a loop back receiving signal is received from the receiver of the transceiver under the sequence of different loop gains. At step S406, at least one estimated value of impairment of the transceiver is estimated by performing channel estimation according to at least the loop back receiving signal. At step S408, calibration is performed upon the transceiver according to the at least one estimated value. As a person skilled in the pertinent art can readily understand details of each step of the calibration method after reading above paragraphs directed to FIGs. 1-3, further description is omitted here for brevity.

The proposed calibration scheme has several advantages over the typical calibration scheme. The proposed calibration scheme supports the Tx-IQ mismatch, Rx-IQ mismatch, Tx-DC and Rx-DC calibrations and the Tx-to-Rx coupling Interferences cancellations in the same time slots. Specifically, the Tx-IQ mismatch, Rx-IQ mismatch, Tx-DC and Rx-DC calibrations can be OTF calibrations or non-OTF calibrations in the same time slots, which saves the calibration time. The Tx-IQ mismatch, Rx-IQ mismatch, Tx-DC and Rx-DC calibrations can be done with the same calibration hardware/software, which saves cost and power. The proposed calibration scheme supports OTF calibration for TRx-IQ mismatch and TRx-DC offset (carrier leakage), and can measurement Tx-image channel, Rx-image channel, Tx-DC value and Rx-DC value with a modulation signal in transmission slots. In this way, the proposed calibration scheme introduces no extra Tx signal leakage into the air. Specifically, due to the fact that the proposed calibration scheme can be implemented as OTF calibration functions, it can utilize normal Tx modulation signals and with same Tx slots, and doesn't generate any extra Tx leakage signal (which is induced from power leakage of a single-tone signal, a multi-tone signal, or a specific calibration signal) into the air. The proposed calibration scheme can support any signal type. For example, the proposed calibration scheme supports a normal modulation signal (wide band), a PNC signal (full band), a single-tone signal, a multi-tone signal, etc. as the calibration signal.

Those skilled in the art will readily observe that numerous modifications and alterations of the device and method may be made while retaining the teachings of the invention. Accordingly, the above disclosure should be construed as limited only by the metes and bounds of the appended claims.

**Claims**

1. A calibration apparatus for calibrating a transceiver comprising:

   a loop back circuit, coupled between a mixer output port of a transmitter (Tx) of the transceiver and a mixer input port of a receiver (Rx) of the transceiver, wherein the loop back circuit is configured to apply a sequence of different loop gains;

   an estimation circuit, configured to receive a loop back receiving signal that is output from the Rx under the sequence of different loop gains, and generate at least one estimated value of impairment of the transceiver by performing channel estimation according to at least the loop back receiving signal; and

   a calibration circuit, arranged to perform calibration upon the transceiver according to the at least one estimated value.

2. The calibration apparatus of claim 1, wherein the loop back circuit comprises:
   a phase shifter, configured to apply the sequence of different loop gains by performing a multi-phase phase rotation.

3. The calibration apparatus of any one of claims 1 or 2, wherein the channel estimation performed by the estimation circuit comprises:

   receiving a baseband input of the Tx of the transceiver; and
   estimating a plurality of Tx-to-Rx loop channel responses of signal by performing delay correlation to project the loop back receiving signal onto the baseband input of the Tx of the transceiver, where the plurality of Tx-to-Rx loop channel responses of signal correspond to the different loop gains, respectively.

4. The calibration apparatus of claim 3, wherein the channel estimation performed by the estimation circuit further comprises:
referring to the plurality of Tx-to-Rx loop channel responses of signal to extract the different loop gains and an equivalent baseband channel response of a Tx-to-Rx coupling total interference signal.

5. The calibration apparatus of any one of claims 1 to 4, wherein the channel estimation performed by the estimation circuit comprises:

   receiving a baseband input of the Tx of the transceiver; and
   estimating a plurality of Tx-to-Rx loop channel responses of image by performing delay correlation to project the loop back receiving signal onto an image of the baseband input of the Tx of the transceiver, where the plurality of Tx-to-Rx loop channel responses of image correspond to the different loop gains, respectively.

6. The calibration apparatus of claim 5, wherein the channel estimation performed by the estimation circuit further comprises:
referring to the plurality of Tx-to-Rx loop channel responses of image to extract at least two of an equivalent baseband Tx total image channel response, an equivalent baseband Rx total image channel response, and an equivalent baseband channel response of a Tx-to-Rx coupling total interference image.

7. The calibration apparatus of any one of claims 1 to 6, wherein the channel estimation performed by the estimation circuit comprises:
estimating a plurality of Tx-to-Rx loop total direct current (DC) values by averaging the loop back receiving signal, where the plurality of Tx-to-Rx loop total DC values correspond to the different loop gains, respectively.

8. The calibration apparatus of claim 7, wherein the channel estimation performed by the estimation circuit further comprises:
referring to the plurality of Tx-to-Rx loop total DC values to extract at least one of an equivalent baseband Tx total DC offset and an equivalent baseband Rx total DC offset.

9. The calibration apparatus of any one of claims 1 to 8, wherein the calibration circuit comprises at least one of a Tx in-phase/quadrature (IQ) mismatch compensator circuit, an Rx IQ mismatch compensator circuit, a Tx direct current (DC) remover circuit, and an Rx DC remover circuit;

   and/or wherein the calibration is on-the-fly calibration, and the loop back receiving signal is generated in response to a baseband input of the Tx of the transceiver that is a modulation signal;
   and/or wherein the calibration is static calibration, and the loop back receiving signal is generated in response to a baseband input of the Tx of the transceiver that is a non-modulation signal.

10. A calibration method for calibrating a transceiver comprising:

   controlling a loop back circuit to apply a sequence of different loop gains, wherein the loop back circuit is coupled between a mixer output port of a transmitter (Tx) of the transceiver and a mixer input port of a receiver (Rx) of the transceiver;
   receiving a loop back receiving signal from the Rx under the sequence of different loop gains;
   generating at least one estimated value of impairment of the transceiver by performing channel estimation according to at least the loop back receiving signal; and
   performing calibration upon the transceiver according to the at least one estimated value.

11. The calibration method of claim 10, wherein the loop back circuit comprises a phase shifter, and controlling the loop back circuit to apply the sequence of different loop gains comprises: applying the sequence of different loop gains by controlling the phase shifter to perform a multi-phase phase rotation.

12. The calibration method of any one of claims 10 or 11, wherein the channel estimation performed by the estimation circuit comprises:

   receiving a baseband input of the Tx of the transceiver; and

estimating a plurality of Tx-to-Rx loop channel responses of signal by performing delay correlation to project the loop back receiving signal onto the baseband input of the Tx of the transceiver, where the plurality of Tx-to-Rx loop channel responses of signal correspond to the different loop gains, respectively.

wherein, for example, performing the channel estimation according to at least the loop back receiving signal further comprises:
referring to the plurality of Tx-to-Rx loop channel responses of signal to extract the different loop gains and an equivalent baseband channel response of a Tx-to-Rx coupling total interference signal.

13. The calibration method of any one of claims 10 to 12, wherein performing the channel estimation according to at least the loop back receiving signal comprises:

receiving a baseband input of the Tx of the transceiver; and
estimating a plurality of Tx-to-Rx loop channel responses of image by performing delay correlation to project the loop back receiving signal onto an image of the baseband input of the Tx of the transceiver, where the plurality of Tx-to-Rx loop channel responses of image correspond to the different loop gains, respectively;

wherein, for example, performing the channel estimation according to at least the loop back receiving signal further comprises:
referring to the plurality of Tx-to-Rx loop channel responses of image to extract at least two of an equivalent baseband Tx total image channel response, an equivalent baseband Rx total image channel response, and an equivalent baseband channel response of a Tx-to-Rx coupling total interference image.

14. The calibration method of any one of claims 10 to 13, wherein performing the channel estimation according to at least the loop back receiving signal comprises:
estimating a plurality of Tx-to-Rx loop total direct current (DC) values by averaging the loop back receiving signal, where the plurality of Tx-to-Rx loop total DC values correspond to the different loop gains, respectively;
wherein, for example, performing the channel estimation according to at least the loop back receiving signal further comprises:
referring to the plurality of Tx-to-Rx loop total DC values to extract at least one of an equivalent baseband Tx total DC offset and an equivalent baseband Rx total DC offset.

15. The calibration method of any one of claims 10 to 14, wherein performing the calibration upon the transceiver according to the at least one estimated value comprises:
performing at least one of calibration operations that comprise a Tx in-phase/quadrature (IQ) mismatch compensation, an Rx IQ mismatch compensation, a Tx direct current (DC) removal, and an Rx DC removal;

and/or wherein the calibration is on-the-fly calibration, and the loop back receiving signal is generated in response to a baseband input of the Tx of the transceiver that is a modulation signal;
and/or wherein the calibration is static calibration, and the loop back receiving signal is generated in response to a baseband input of the Tx of the transceiver that is a non-modulation signal.

100

Calibration apparatus

Loop back circuit          102

LB_IN →          $g_p$          → LB_OUT

x(n) →     Estimation circuit     104     → $r'_{x,p}(n)$

$\Delta h_{tx}(n), \Delta h_{rx}(n)$
$dc_{tx,eq}, dc'_{rx,eq}$

Calibration circuit

$\Delta h_{tx,comp}(n)$     $\Delta h_{rx,comp}(n)$          106

$\widehat{dc}_{tx}$          $\widehat{dc}_{rx}$

FIG. 1

FIG. 2

FIG. 3

FIG. 4

Europäisches
Patentamt

European
Patent Office

Office européen
des brevets

# EUROPEAN SEARCH REPORT

**Application Number**

EP 24 19 5902

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/170622 A1 (LY-GAGNON YANN [US]) 5 July 2012 (2012-07-05) * column 2 - column 10; figure 1 * ----- | 1-6, 9-13,15 | INV. H04B17/14 H04B1/525 |
| X | US 2021/377095 A1 (NAYEBI ELINA [US] ET AL) 2 December 2021 (2021-12-02) * paragraphs [0020] - [0133]; figure 1 * ----- | 1-6, 9-13,15 | ADD. H04B1/38 H04B1/40 H04B1/62 |
| X | US 8 295 845 B1 (ABDOLLAHI-ALIBEIK SHAHRAM [US] ET AL) 23 October 2012 (2012-10-23) | 1-6, 9-13,15 | H04L25/02 H04L27/148 |
| Y | * paragraphs [0020] - [0034]; figures 1,3 * ----- | 7,8,14 | |
| X | US 10 116 485 B1 (LIU TIENYOW [US] ET AL) 30 October 2018 (2018-10-30) | 1-6, 9-13,15 | |
| Y | * column 4 - column 10; figure 4 * * column 13 - column 23 * * column 16, line 20 - column 17, line 30; figure 4 * ----- | 7,8,14 | |

**TECHNICAL FIELDS SEARCHED (IPC)**

H04B
H04L

The present search report has been drawn up for all claims

| Place of search | Date of completion of the search | Examiner |
|---|---|---|
| The Hague | 19 December 2024 | Losada Corderí, Iker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 513 789 A1**

## ANNEX TO THE EUROPEAN SEARCH REPORT
## ON EUROPEAN PATENT APPLICATION NO.

EP 24 19 5902

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2024

| Patent document cited in search report | Publication date | Patent family member(s) | Publication date |
|---|---|---|---|
| US 2012170622 A1 | 05-07-2012 | US 2012170622 A1 | 05-07-2012 |
| | | US 2013121389 A1 | 16-05-2013 |
| | | WO 2012094218 A1 | 12-07-2012 |
| US 2021377095 A1 | 02-12-2021 | CN 113676430 A | 19-11-2021 |
| | | DE 102021104137 A1 | 18-11-2021 |
| | | KR 20210141344 A | 23-11-2021 |
| | | TW 202145730 A | 01-12-2021 |
| | | US 2021377095 A1 | 02-12-2021 |
| | | US 2023327939 A1 | 12-10-2023 |
| US 8295845 B1 | 23-10-2012 | NONE | |
| US 10116485 B1 | 30-10-2018 | NONE | |

EPO FORM P0459

For more details about this annex : see Official Journal of the European Patent Office, No. 12/82

**REFERENCES CITED IN THE DESCRIPTION**

**Patent documents cited in the description**

- US 63578670